(19) **Europäisches Patentamt**

**European Patent Office**

**Office européen des brevets**

(11) Veröffentlichungsnummer: **0 231 829**
A2

(12) # EUROPÄISCHE PATENTANMELDUNG

(21) Anmeldenummer: **87100922.1**

(22) Anmeldetag: **23.01.87**

(51) Int. Cl.⁴: **B60T 13/68** , B60T 15/46

(30) Priorität: **07.02.86 DE 3603963**

(43) Veröffentlichungstag der Anmeldung:
**12.08.87 Patentblatt 87/33**

(84) Benannte Vertragsstaaten:
**DE FR IT NL SE**

(71) Anmelder: **KNORR-BREMSE AG**
**Moosacher Strasse 80 Postfach 401060**
**D-8000 München 40(DE)**

(72) Erfinder: **Broch, Walter**
**Hauptstrasse 15**
**D-8061 Wiedenzhausen(DE)**
Erfinder: **Straub, Laszlo**
**Max-Löw-Strasse 12**
**D-8014 Neubiberg(DE)**

(54) **Druckluftbremseinrichtung für Kraftfahrzeugzüge.**

㊼ Die Druckluftbremseinrichtung für Kraftfahrzeugzüge weist in einer sich von einem Anhängersteuerventil I zu einem Anhängerbremsventil 7 erstreckenden Anhängerbremsleitung 8,9 einen EP-Wandler IO auf, welcher nur während Bremsungen von einem Sensor 22 angesteuert wird, der die an der mechanischen Kupplungsvorrichtung auftretenden Kräfte mißt. Während Bremsungen ändert bei Auftreten von Kupplungskräften der EP-Wandler IO den Druck in den zum Anhängerbremsventil 7 führenden Abschnitt 9 der Anhängerbremsleitung 8,9 derart, daß die Anhängerbremswirkung sich an die Bremswirkung des Zugfahrzeuges so anpaßt, daß an der Kupplungsvorrichtung nur eine bestimmte, vorgegebene und eine optimale Bremsabstimmung signalisierende Kupplungskraft auftritt.

EP 0 231 829 A2

## Druckluftbremseinrichtung für Kraftfahrzeugzüge

Die Erfindung betrifft eine Druckluftbremseinrichtung für Kraftfahrzeugzüge, gegebenenfalls Sattelzüge, mit einem den Druck in einer Anhängerbremsleitung steuernden Anhängersteuerventil und einem vom Druck in der Anhängerbremsleitung gesteuerten Anhängerbremsventil.

Bei derartigen Fahrzeugkombinationen mit ziehendem und gezogenem Fahrzeug ist es seit jeher ein Problem, die Bremskräfte zwischen ziehendem und gezogenem Fahrzeug optimal abzustimmen, wobei ein Vermeiden von Instabilitäten zwischen den gekuppelten Fahrzeugen und eine möglichst gleichmäßige Bremsbelastung von Zugfahrzeug und Anhänger bzw. Auflieger anzustreben ist. In der Regel gelingt diese Abstimmung nur für bestimmte Fahrzeugkombinationen. Wenn diese Kombinationen geändert werden, beispielsweise bei Austausch des Zugfahrzeuges oder des Anhängers, wird diese Abstimmung gestört, wodurch sich am Zugfahrzeug und am Anhänger unterschiedliche, zu Bremswegverlängerungen führende Bremswirkungen ergeben können. Die unterschiedlichen Bremswirkungen können auch zum Ausbrechen des Kraftfahrzeugzuges führen.

Zur Abstimmung der Bremswirkung von Zugfahrzeug und Anhänger wurde bisher im Anhängersteuerventil die sogenannte Voreilung für die Ansteuerung der Anhängerbremse vorgesehen; aber auch diese Voreilung ist jeweils nur für eine bestimmte Zugfahrzeug-Anhänger-Kombination optimal einstellbar, sie kann bei Änderung dieser Kombination nicht ohne weiteres zur Anpassung an eine neue Kombination geändert werden.

Es ist Aufgabe der Erfindung, eine Druckluftbremseinrichtung der eingangs genannten Art in einfacher und billiger Weise derart auszubilden, daß sich selbsttätig stets eine zumindest annähernd optimale Bremsbelastung für das Zugfahrzeug und den Anhänger bzw. Auflieger einstellt oder, mit anderen Worten, daß sich stets automatisch eine optimale Voreilung der Anhängerbremsansteuerung ergibt. Dabei soll jedoch sichergestellt sein, daß sowohl die Zugfahrzeuge wie die Anhänger bzw. Auflieger ohne jegliche Schwierigkeiten auch mit Fahrzeugen mit bisher üblicher Druckluftbremsausrüstung kuppelbar sind.

Diese Aufgabe wird nach der Erfindung dadurch gelöst, daß in die Anhängerbremsleitung ein Korrekturventil eingeordnet ist, welches von an der Anhängerkupplung auftretenden Kräften gesteuert ist und welches nur während Bremsungen den Druck im zwischen dem Korrekturventil und dem Anhängerbremsventil befindlichen Abschnitt der Anhängerbremsleitung in Richtung einer ein Optimieren der an der Anhängerkupplung anstehenden Kräfte bewirkenden Änderung der Anhängerbremsung abändert. Hierdurch wird selbsttätig eine Änderung der Anhängerbremsansteuerung bewirkt, derart, daß sich eine optimale Abstimmung der Bremswirkung zum Zugfahrzeug und Anhänger ergibt.

Die nach der weiteren Erfindung vorteilhaften Ausgestaltungsmöglichkeiten für die Druckluftbremse sind den Unteransprüchen entnehmbar. Es ist besonders hervorzuheben, daß bei Verwendung der Druckluftbremseinrichtung in einem ein Zugfahrzeug und wenigstens einen Anhänger umfassenden Kraftfahrzeug es gemäß Anspruch 3 zweckmäßig ist, wenn durch das Optimieren vorgegebene, geringe Zugkräfte an der Anhängerkupplung bewirkt werden, welche den Kraftfahrzeugzug in seiner Fahrt stabilisieren. Bei Verwendung der Druckluftbremseinrichtung in einem Sattelzug ist es dagegen gemäß Anspruch 4 zweckmäßig, wenn durch das Optimieren eine bestimmte Auflaufkraft des Aufliegers auf das Zugfahrzeug bewirkt wird, wodurch angestrebt wird, daß das Zugfahrzeug eine wenigstens annähernd dem Auflagegewicht des Aufliegers entsprechende Bremswirkung auf den Auflieger ausübt und die Bremsen des letzteren nicht übermäßig beansprucht werden.

Aus der DE-AS 2 006 835 ist eine elektronische Bremsregeleinrichtung für aus mehrere Wagen bestehende Züge bekannt, bei welchen die Bremsen der Anhängerwagen in Abhängigkeit von an den Kupplungsorganen auftretenden Kräften über elektronische Regelglieder gesteuert werden. Aus der DE-PS 1 137 471 ist weiterhin eine elektropneumatische Bremseinrichtung für ebenfalls Schienenfahrzeuge bekannt, bei welcher zwischen eine dort als Leitung bezeichnete Hauptluftleitung und ein Bremssteuerventil ein EP-Ventil eingeordnet ist, welches den dem Bremssteuerventil zuzuführenden Druck proportional zu einer elektrischen Erregungsstärke mindert.

Die FR-PS 1 212 280 zeigt einen als Elektroventil bezeichneten EP-Wandler, der insbesondere zur Verwendung bei Schienenfahrzeugbremsen vorgesehen ist.

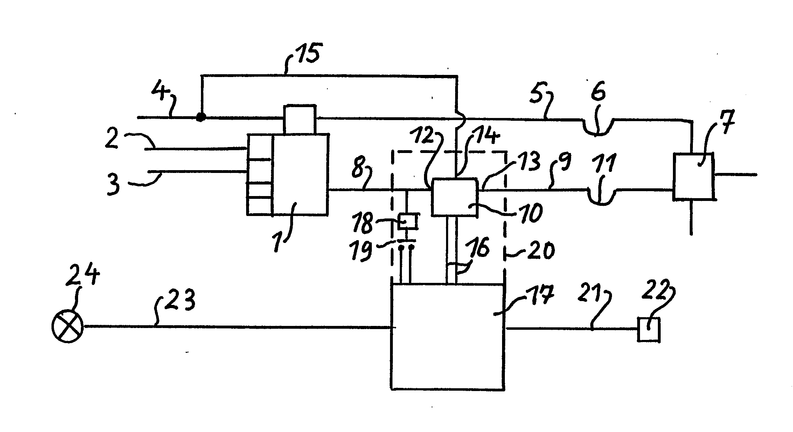

In der Zeichnung ist als Ausführungsbeispiel für die Erfindung eine Druckluftbremseinrichtung in den für die Erfindung wesentlichen Teilen - schematisch dargestellt. Zum Vereinfachen ist dabei von dem in der Praxis am häufigsten auftretenden Fall ausgegangen, daß bei mangelhafter Bremsanpassung der Anhänger nur zu schwach, nicht aber zu stark gebremst wird.

Ein Anhängersteuerventil I wird über Leitungen 2 und 3 von den beiden im übrigen nichtdargestellten Bremskreisen eines Zugfahrzeuges, gegebenenfalls einer Sattelzugmaschine angesteuert. Es können noch weitere, nichtdargestellte Ansteuerungen vorgesehen sein, beispielsweise von einer Hand-, Hilfs-oder Federspeicherbremse. Weiterhin ist das Anhängersteuerventil I über eine Leitung 4 mit einem nichtdargestellten Druckluftvorratsbehälter verbunden. Vom Anhängersteuerventil I führt eine Anhängervorratsleitung 5 über eine Anhängervorratskupplung 6 zu einem in Anhänger- bzw. Auflieger angeordneten Anhängerbremseventil 7. Weiterhin geht vom Anhängersteuerventil I ein Abschnitt 8 einer Anhängerbremsleitung 8,9 aus, wobei zwischen die beiden Abschnitte 8 und 9 der Anhängerbremsleitung 8,9 ein als EP-Wandler IO ausgebildetes Korrekturventil eingeordnet ist. Der Abschnitt 9 der Anhängerbremsleitung 8,9 führt über eine Anhängerbremsleitungskupplung II zum Anhängerbremsventil 7. Das Anhängerbremsventil 7 steht in nichtdargestellter Weise mit einem aus der Anhängervorratsleitung 5 aufladbaren Druckluftvorratsbehälter und, gegebenenfalls über lastabhängige Regeleinrichtungen, mit Bremszylindern in Verbindung, wie es allgemein üblich ist. Mit Ausnahme des EP-Wandlers IO ist also insoweit eine übliche Zweileitungsdruckluftbremse vorgesehen.

Der EP-Wandler IO kann handelsüblicher Bauart sein, wobei lediglich sicherzustellen ist, daß er auch bei von Atmosphärendruck abweichendem Normaldruckniveau in seinen Ausgangsanschluß im unerregten Zustand das Normaldruckniveau, bei Erregung jedoch einen das Normaldruckniveau um einen seiner Erregungsstärke proportionalen Druckwert übersteigenden Druck einsteuert. Der Außenluftanschluß I2 dieses EP-Wandlers IO ist an den zum Anhängersteuerventil I führenden Abschnitt 8 und der Ausgangsanschluß I3 ist an den zum Anhängerbremsventil 7 führenden Abschnitt 9 der Anhängerbremsleitung 8,9 angeschlossen. Vom Eingangsanschluß I4 des EP-Wandlers IO führt eine Rohrleitung I5 zur Leitung 4 und damit zum Druckluftvorrat des Zugfahrzeuges. Der EP-Wandler IO ist über elektrische Leitungen I6 erregbar, welche zu einer Auswertelektronik I7 führen. An den Abschnitt 8 der Anhängerbremsleitung 8,9 ist des weiteren ein Druckwächter I8 angeschlossen, welcher bei Überschreiten eines bestimmten Mindestdruckes von beispielsweise O,5 bar einen Schalter I9 schließt, wodurch die Auswertelektronik I7 eingeschaltet bzw. der EP-Wandler IO aktiviert wird. Der EP-Wandler IO kann zusammen mit dem Druckwächter 8 und dem Schalter I9 sowie gegebenenfalls noch der Auswertelektronik I7 zu einer Baueinheit zusammengefaßt sein, wie es mit der gestrichelten Linie 2O dargestellt ist.

Die Auswertelektronik I7 steht über eine Meßleitung 2I mit einem Sensor 22 in Verbindung, wobei der Sensor 22 an der mechanischen Anhängerkupplungsvorrichtung angeordnet ist und Signale in die Meßleitung 2I einspeist, welche den vom Anhänger auf die Kupplungsvorrichtung ausgeübten Schubkräften entsprechen. Bei Sattelzugmaschinen ist es zweckmäßig, den Sensor 22 am Königszapfen der die Anhängerkupplung darstellenden Aufliegevorrichtung derart anzuordnen, daß er die Auflieger-Schubkräfte zu messen vermag. Weiterhin geht von der Auswertelektronik I7 eine Signalleitung 23 aus, welche zu einer im Fahrerhaus angeordneten Kontrolleuchte 24 führt.

Der EP-Wandler IO hält im Ruhezustand bzw. im nichtaktivierten Zustand seine Anschlüsse I2 und I3 verbunden, während er den Anschluß I4 sperrt. Bei Erregung bzw. Betätigung über die Leitungen I6 trennt er den Anschluß I2 ab und speist aus dem Anschluß I4 in den Anschluß I3 einen den am Anschluß I2 anstehenden Druckwert um die jeweils anstehende Erregungs-bzw. Betätigungsstärke übersteigenden Druck ein. Als EP-Wandler IO sind somit nach entsprechender, einfacher Anpassung die aus den eingangs genannten DE-PS I I37 47I oder FR-PS I 2I2 28O bekannten Einrichtungen verwendbar.

Es ergibt sich somit, daß bei Bremsungen mit korrekt aufeinander abgestimmter Zugfahrzeug-und Anhängerbremse, wobei am Sensor 22 optimale Kupplungskräfte anzeigende Kräfte auftreten, der EP-Wandler IO mangels einer Erregung bzw. Betätigung durch die Leitungen I6 ständig seine Anschlüsse I2 und I3 verbunden hält, so daß die Anhängerbremsleitung 8,9 den üblichen Durchgang aufweist und das Anhängerbremsventil 7 entsprechend der Ansteuerung durch den vom Anhängersteuerventil I ausgesteuerten Anhängerbremsleitungsdruck die Anhänger-bzw. Aufliegerbremse betätigt. Es können dabei übliche Sicherungsvorrichtungen vorgesehen sein, welche bei Leitungs-bzw. Kupplungsbruch in der Anhängervorratsleitung 5 und/oder Anhängerbremsleitung 8,9 oder aber auch bei unzulässigem Vorratsdruckabfall über das Anhängerbremsventil 7 die Anhänger-bzw. Aufliegerbremse betätigen.

Bei mangelhafter Abstimmung von Zugfahrzeug-und Anhänger-bzw. Aufliegerbremse weist letztere wie bereits erwähnt nahezu stets eine zu geringe Bremswirkung auf, so daß der Anhänger bzw. Auflieger auf das Zugfahrzeug aufläuft und an der mechanischen Anhänger-bzw. Aufliegerkupplung unerwünscht große Auflaufkräfte entstehen. Diese Auflaufkräfte werden vom Sensor 22 gemessen und mittels Meßsignalen durch die Meßleitung 2I der Auswertelektronik I7 zugeführt. Die Auswertelektronik I7, welche nur während

Bremsungen nach Erreichen des Mindestdruckes im Abschnitt 8 der Anhängerbremsleitung 8,9 eingeschaltet bzw. aktiviert wird, erregt bzw. betätigt sodann durch die Leitungen 16 den EP-Wandler 10 entsprechend den in der Meßleitung 21 anstehenden Signalen. Der EP-Wandler 10 steuert infolgedessen in den Abschnitt 9 der Anhängerbremsleitung 8,9 eine Drucksteigerung über den im Abschnitt 8 anstehenden Druckwert ein, wodurch das Anhängerbremsventil 7 verstärkt angesteuert wird und die Anhänger-bzw. Aufliegerbremse verstärkt betätigt. Durch diese verstärkte Anhänger-bzw. Aufliegerbremsung vermindern sich die an den mechanischen Kupplungsvorrichtungen anstehenden Auflaufkräfte des Anhängers bzw. Aufliegers auf einen gewünschten Sollwert, der bei Kraftfahrzeugzügen eine Zugkraft sein kann und bei dessen Erreichen die Auswertelektronik über den EP-Wandler 10 die Ansteuerung des Anhängerbremsventils 7 durch den Abschnitt 9 konstant hält. Die Bremswirkungen von Zugfahrzeug und Anhänger bzw. Auflieger sind nunmehr richtig aufeinander abgestimmt.

Sollte sich, ausgehend von diesem Zustand, die Bremswirkung des Anhängers bzw. Aufliegers verstärken, so ändert sich die Belastung des Sensors 22 entsprechend und die Auswertelektronik 17 vermindert demgemäß die Erregung bzw. Betätigung des EP-Wandlers 10 derart, daß dieser in den Abschnitt 9 eine entsprechende Druckminderung einsteuert; die zu entlassende Druckluft gelangt dabei durch den EP-Wandler 10 zum Abschnitt 8 und aus diesem durch das die in den Abschnitt 8 eingesteuerte Druckhöhe konstant haltende Anhängersteuerventil 1 zur Atmosphäre. Die Ansteuerung des Anhängerbremsventils 7 wird also derart gemindert, daß sich wieder eine richtige Abstimmung von Triebfahrzeug-und Anhängerbremse ergibt.

Sollten abweichend zu vorstehend beschriebenem Ausführungsbeispiel bei nichtoptimaler Bremsenabstimmung auch zu starke Anhängerbremswirkungen auftreten, so können auch diese durch die hieraus resultierenden, an der Anhängerkupplung auftretenden Kräfte bei entsprechender Sensorauslegung erfaßt werden. Über die Auswertelektronik ist dabei der hierbei mit einer gesonderten Entlütung zu versehende EP-Wandler 10 derart anzusteuern, daß er den Druck in Abschnitt 9 der Anhängerbremsleitung 8,9 unter den im Abschnitt 8 herrschenden Druckwert absenkt.

Es ist ersichtlich, daß alle nach der Erfindung erforderlichen, zusätzlichen Geräte im Triebfahrzeug angeordnet sind und der Anhänger bzw. Auflieger eine übliche Zweileitungsbremsanlage aufweist. Es ist daher ohne weiteres möglich, das Zugfahrzeug mit anderen Anhängern zu koppeln, wobei stets die Betätigung der Anhängerbremse zur korrekten Bremsanpassung nachgeregelt wird. Auch ist ohne weiteres eine Alleinfahrt des Zugfahrzeuges möglich. Bei Ausfall der Auswertelektronik 17 bzw. des EP-Wandlers 10 verbindet letzterer stets seine Anschlüsse 12 und 13 unter Absperrung des Anschlusses 14 miteinander, so daß sowohl die Zugfahrzeug-wie die Anhänger-bzw. Aufliegerbremse in üblicher Weise, allerdings ohne selbsttätige Anpassung, funktionsbereit sind. Bei diesem Ausfall bzw. bei übermäßig großem, vom Sensor 22 gemessenen Auflaufkräften gibt die Auswertelektronik 17 durch die Signalleitung 23 und die Kontrolleuchte 24 ein Warnsignal ab. Dem Fahrer wird hierdurch ein Fehler im System angezeigt, beim Fehlen eines derartigen Fehlers ist aus dem Aufleuchten der Kontrolleuchte 24 auf mangelnde Bremswirkung des Anhängers bzw. Aufliegers, beispielsweise durch verglaste, verschlissene oder verölte Bremsbeläge verursacht, zu schließen.

Bei Bergabfahrt mit gelöster Bremse hält der Druckwächter 18 infolge durch das Anhängersteuerventil 1 entlüftetem Abschnitt 8 der Anhängerbremse 8,9 den Schalter 19 geöffnet, so daß trotz Auftretens von Auflaufkräften und entsprechender Signalabgabe durch den Sensor 22 die Auswertelektronik den EP-Wandler 10 nicht erregen bzw. betätigen kann, somit auch der Abschnitt 9 der Anhängerbremsleitung 8,9 weiterhin über das Anhängersteuerventil 1 entlüftet bleibt. Die Anhängerbremse bleibt somit während der Talfahrt gelöst, sie wird nur nach Betätigen der Zugfahrzeugbremse ebenfalls betätigt.

Es ist selbstverständlich auch möglich, den EP-Wandler mit der Auswertelektronik und dem Sensor bei üblichen Einleitungsbremsen vorzusehen, wobei lediglich in der Ansteuerung des EP-Wandlers 10 und dessen Einbau zu berücksichtigen ist, daß bei übermäßigen Auflaufkräften der EP-Wandler eine der Signalabgabe des Sensors entsprechende Druckminderung in den zum Anhängerbremsventil führenden Abschnitt der Anhängerbremsleitung einsteuern muß. Bei Verwendung eines handelsüblichen EP-Wandlers ist dessen Eingangsanschluß an den zum Anhängersteuerventil und dessen Ausgangsanschluß an den zum Anhängerbremsventil führenden Abschnitt der Anhängerleitung und der Außenluftanschluß an die Atmosphäre anzuschließen, die Auswertelektronik hat dabei das EP-Ventil derart zu betätigen, daß dieses den Druck im zum Anhängerbremsventil führenden Abschnitt der Anhängerbremsleitung entsprechend der Größe der Auflaufkraft des Anhängers bzw. Aufliegers reduziert. Es ergibt sich hieraus, daß beispielsweise die Anordnung nach der DE-PS 1 137 471 unmittelbar verwendbar ist. Der Druckwächter 18 ist dabei derart in einen Drucksensor abzuwandeln, daß er bei Unterschreiten des normalen Lösedruckes in der Anhängerbremsleitung um einen bestimmten Wert den Schalter 19 schließt. Um zu starke Anhängerbremsungen abregeln zu können, kann -analog zur Ausbildungsmöglichkeit bei Zweileitungsbremsen -der EP-Wandler mit einem zusätzlichen Druckluftspeiseanschluß versehen sein, so daß der den Anhängerbremsventil zuführende Anhängerbremsleitungsdruck bei Bedarf gesteigert werden kann, wodurch ein Teillösen der Anhängerbremse erfolgt.

In Abänderung zu den vorstehend beschriebenen Ausführungsformen ist es auch möglich, alle zum Realisieren der Erfindung erforderlichen Zusatzgeräte, also den Sensor, die Auswertelektronik und den EP-Wandler, im Anhänger bzw. Auflieger unterzubringen. In diesem Fall paßt sich die Anhängerbremse selbsttätig an das Bremsverhalten des jeweils angekoppelten Zugfahrzeuges an.

### Kurzfassung

Die Druckluftbremseinrichtung für Kraftfahrzeugzüge weist in einer sich von einem Anhängersteuerventil 1 zu einem Anhängerbremsventil 7 erstreckenden Anhängerbremsleitung 8,9 einen EP-Wandler 10 auf, welcher nur während Bremsungen von einem Sensor 22 angesteuert wird, der die an der mechanischen Kupplungsvorrichtung auftretenden Kräfte mißt. Während Bremsungen ändert bei Auftreten von Kupplungskräften der EP-Wandler 10 den Druck in den zum Anhängerbremsventil 7 führenden Abschnitt 9 der Anhängerbremsleitung 8,9 derart, daß die Anhängerbremswirkung sich an die Bremswirkung des Zugfahrzeuges so anpaßt, daß an der Kupplungsvorrichtung nur eine bestimmte, vorgegebene und eine optimale Bremsabstimmung signalisierende Kupplungskraft auftritt.

### Bezugszeichenliste

1 Anhängersteuerventil
2 Leitung
3 Leitung
4 Leitung
5 Anhängervorratsleitung
6 Anhängervorratsleitungskupplung
7 Anhängerbremsventil
8 Abschnitt
9 Abschnitt
8,9 Anhängerbremsleitung
10 EP-Wandler
11 Anhängerbremsleitungskupplung
12 Außenluftanschluß
13 Ausgangsanschluß
14 Eingangsanschluß
15 Rohrleitung
16 Leitungen
17 Auswertelektronik
18 Druckwächter
19 Schalter
20 Linie
21 Meßleitung
22 Sensor
23 Signalleitung
24 Kontrolleuchte

### Ansprüche

1. Druckluftbremseinrichtung für Kraftfahrzeugzüge, gegebenenfalls Sattelzüge, mit einem den Druck in einer Anhängerbremsleitung (8,9) steuernden Anhängersteuerventil (1) und einem vom Druck in der Anhängerbremsleitung (8,9) gesteuerten Anhängerbremsventil (7), dadurch gekennzeichnet, daß in die Anhängerbremsleitung - (8,9) ein Korrekturventil (10) eingeordnet ist, welches von an der Anhängerkupplung auftretenden Kräften gesteuert ist und welches nur während Bremsungen den Druck im zwischen dem Korrekturventil (10) und dem Anhängerbremsventil (7) befindlichen Abschnitt (9) der Anhängerbremsleitung (8,9) in Richtung einer ein Optimieren der an der Anhängerkupplung anstehenden Kräfte bewirkenden Änderung der Anhängerbremsung abändert.

2. Druckluftbremseinrichtung nach Anspruch 1, dadurch gekennzeichnet, daß an der Anhängerkupplung ein die diese durchsetzenden Kupplungskräfte messender Sensor (22) angeordnet ist, dessen Meßsignale über eine Auswertelektronik (17) dem als EP-Wandler (10) ausgebildeten Korrekturventil (10) zu dessen Betätigung zugeführt werden.

3. Druckluftbremseinrichtung nach Anspruch 2, für ein Zugfahrzeug und wenigstens einen Anhänger umfassende Kraftfahrzeugzüge, dadurch gekennzeichnet, daß der EP-Wandler (10) den zum Anhängerbremsventil (7) ausgesteuerten Druck in Richtung eines Anstehens vorgegebener Stabilisierungs-Zugkräfte an der Anhängerkupplung steuert.

4. Druckluftbremseinrichtung nach Anspruch 2, für einen Sattelzug, dadurch gekennzeichnet, daß der EP-Wandler (10) den zum Anhängerbremsventil (7) ausgesteuerten Druck in Richtung eines Anstehens einer vorgegebenen Auflaufkraft an der die Anhängerkupplung darstellenden Aufliegevorrichtung steuert.

5. Druckluftbremseinrichtung nach Anspruch 2 und 3 oder 4, in Zweileitungsausführung, dadurch gekennzeichnet, daß bei Verwendung eines handelsüblichen EP-Wandlers (10) als Korrekturventil

dessen Außenluftanschluß (12) an den zwischen dem Anhängersteuerventil (1) und dem EP-Wandler (10) befindlichen Abschnitt (8) der Anhängerbremsleitung (8,9), dessen Eingangsanschluß (14) an einen Druckluftvorrat (Leitung 4), gegebenenfalls die Anhängervorratsleitung (5), und dessen Ausgangsanschluß (13) an den zum Anhängerbremsventil (7) führenden Abschnitt (9) der Anhängerbremsleitung (8,9) angeschlossen ist, wobei die Auswertelektronik (17) das EP-Ventil (10) derart betätigt, daß dieses den Druck im zum Anhängerbremsventil (7) führenden Abschnitt (9) der Anhängerbremsleitung (8,9) bei bezogen auf die optimale Größe zu hoher Auflaufkraft des Anhängers erhöht.

6. Druckluftbremse nach Anspruch 2 und 3 oder 4, in Einleitungsausführung, dadurch gekennzeichnet, daß bei Verwendung eines handelsüblichen EP-Wandlers als Korrekturventil dessen Eingangsanschluß an den zum Anhängersteuerventil und dessen Ausgangsanschluß an den zum Anhängerbremsventil führenden Abschnitt der Anhängerbremsleitung und dessen Außenluftanschluß an die Atmosphäre angeschlossen ist, wobei die Auswertelektronik das EP-Ventil derart betätigt, daß dieses den Druck im zum Anhängerbremsventil führenden Abschnitt der Anhängerbremsleitung bei bezogen auf die optimale Größe zu hoher Auflaufkraft des Anhängers reduziert.

7. Druckluftbremseinrichtung nach Anspruch 2, dadurch gekennzeichnet, daß das Korrekturventil - (10), der Sensor (22) und die Auswertelektronik (17) am Triebfahrzeug angeordnet sind.

8. Druckluftbremseinrichtung nach Anspruch 4 und 7, dadurch gekennzeichnet, daß der Sensor - (22) am Königszapfen der Sattelzugmaschine angeordnet ist.

9. Druckluftbremseinrichtung nach Anspruch 1, dadurch gekennzeichnet, daß dem Korrekturventil - (10) in der Anhängerbremsleitung (8,9) ein Drucksensor (18) vorgeschaltet ist, der das Korrekturventil (10) nur bei vom Lösedruck für die Anhängerbremse um zumindest einen bestimmten Schwellenwert abweichenden Druck aktiviert.

10. Druckluftbremseinrichtung nach den Ansprüchen 5 und 9, dadurch gekennzeichnet, daß der Drucksensor ein Druckwächter (18) ist, der bei Erreichen eines Mindestdruckes die Auswertelektronik (17) einschaltet.